# EUROPEAN PATENT SPECIFICATION

(11) **EP 4 269 966 B1**
(45) Date of publication and mention of the grant of the patent: **13.11.2024**
(21) Application number: 23168387.1
(22) Date of filing: 18.04.2023
(51) Int. Cl.: G01K 1/14

(54) **METHOD AND DEVICE FOR THE AUTOMATIC MONITORING OF THE TEMPERATURE OF THE ELECTRICAL COMPONENTS INSIDE AN INDUSTRIAL CABINET**
VERFAHREN UND VORRICHTUNG ZUM AUTOMATISCHEN ÜBERWACHEN DER TEMPERATUR ELEKTRISCHER KOMPONENTEN IN EINEM INDUSTRIELLEN SCHRANK
PROCÉDÉ ET DISPOSITIF POUR LE CONTROL AUTOMATIQUE DE LA TEMPÉRATURE DES COMPOSANTS ÉLECTRIQUES DANS UNE ARMOIRE INDUSTRIELLE

(30) Priority: 22.04.2022 IT 202200007976
(43) Date of publication of application: 01.11.2023
(73) Proprietor: R A M Elettronica S.r.l., 76123 Andria (BA) (IT)
(72) Inventor: SCARCELLI, Riccardo, 76123 Andria (BT) (IT)
(74) Representative: Corradini, Corrado

(56) References cited:
- US-A1- 2010 044 567
- US-B2- 10 841 508

## Description

The present invention relates to a method and a device for the automatic monitoring of the temperature of the electrical components inside an industrial cabinet.

As is known by "industrial cabinet" is meant to denote in jargon a closed or reclosable container with a door (precisely in the form of a cabinet) in which an electrical panel is housed and operational, which in turn comprises electrical apparatuses of various types. Typically, but not exclusively, in an industrial cabinet the electrical apparatuses are mounted on an electrical panel; when observing the inside of the cabinet with open door, the panel and the relative apparatuses are visible as if they were arranged on a plane that is substantially parallel to that of the closed door.

A non-limiting example is an industrial cabinet containing an electrical panel designed to perform a control of industrial machines and comprising electrical apparatuses such as power regulation elements (high/low voltage transformers), switches of the plant lines, breaker switches, grounding connections and the like.

The electrical apparatuses of the panel are subject, in operation, to heating that can also entail risks of overheating, malfunctions or even,
in extreme cases, fires.

It is therefore quite common practice to provide a system for monitoring the temperature of the electrical apparatuses in the cabinet.

In the state of the art several solutions of various types have been made.

A known solution provides that the device for detecting the temperature of electrical apparatuses in an industrial cabinet comprises an assembly for moving a detection head provided with detection sensors that moves parallel to the electrical panel to detect the temperature of the electrical components inside the cabinet.

Although generally functional, this solution has however some limitations.

A first limit is linked to the measurement precision and the time required for the temperature sensors to detect temperature anomalies: the sensors have a limited detection area (in which they can detect the temperature) and in order to detect the temperature of the entire panel it is thus necessary to gradually move the head with the sensors insomuch as it runs a rather long path, to allow the sensors to detect the temperatures of the entire electrical panel.

In this context there is a further limit, linked to obtaining the maximum efficiency (understood with reference to the measurements that can be carried out in a unit of time) of the detection head without indiscriminately increasing its weight and cost; it is not thus conceivable to indiscriminately increase the number of sensors in order to reduce the travel time of the head in the cabinet.

Another example of system for monitoring the temperature of the electrical apparatus in the cabinet is to be found in US2010/0044567 A1, where a thermographic imaging equipment incorporated directly into cabinets housing electrical switchgear is described.

The task of the present invention is to realize a method and a device for the automatic monitoring of the temperature of the electrical components inside an industrial cabinet that is able to improve the prior art in one or more of the aspects indicated above.

As part of this task, an aim of the invention is to make available a method and a device for the automatic monitoring of the temperature of the electrical components inside an industrial cabinet that allows to detect temperatures of the electrical components accurately and quickly.

Another aim of the invention is to limit the number of sensors and of the parts of the detection head so as to contain its weight without negatively impacting the detection performance of the device.

A further aim of the invention is to ensure an optimal balance between the measurement reliability and the weight and the overall dimensions compatible with the movement of the detection head.

Furthermore, the present invention aims to overcome the drawbacks of the prior art in an alternative way to any existing solutions.

Not the least aim of the invention is to realize a method and a device of the type mentioned above that are of high reliability, relatively easy to realize and at competitive costs.

This task, as well as these and other aims that will better appear later, are achieved by a method according to claim 1, optionally provided with one or more of the features of the claims dependent thereon and by a device according to the respective independent claim, optionally provided with one or more of the features of the claims dependent thereon. Further characteristics and advantages of the invention will more fully emerge from the description of a preferred but not exclusive embodiment of the device and of the method according to the invention, illustrated by way of non-limiting example in the appended drawings, in which:
- Figure 1 illustrates a perspective view of the device according to the invention mounted in an industrial cabinet;
- Figure 2 illustrates a front view of the device of Figure 1;
- Figure 3 illustrates a schematic view of the detection head of the device of Figure 1;
- Figure 4 illustrates a possible operating diagram of the device of Figure 1.

With reference to the cited figures, a device according to the invention is globally indicated with the reference numeral 1.

Before describing the method subject-matter of the invention, it is clearer to describe the device 1.

With reference to the accompanying figures, the device 1 is configured to be mounted internally to an industrial cabinet 100, in which the electrical panel 101 housed therein is present, seen frontally from the outside, with the door of the cabinet 100 open, as if it were substantially arranged on a vertical plane.

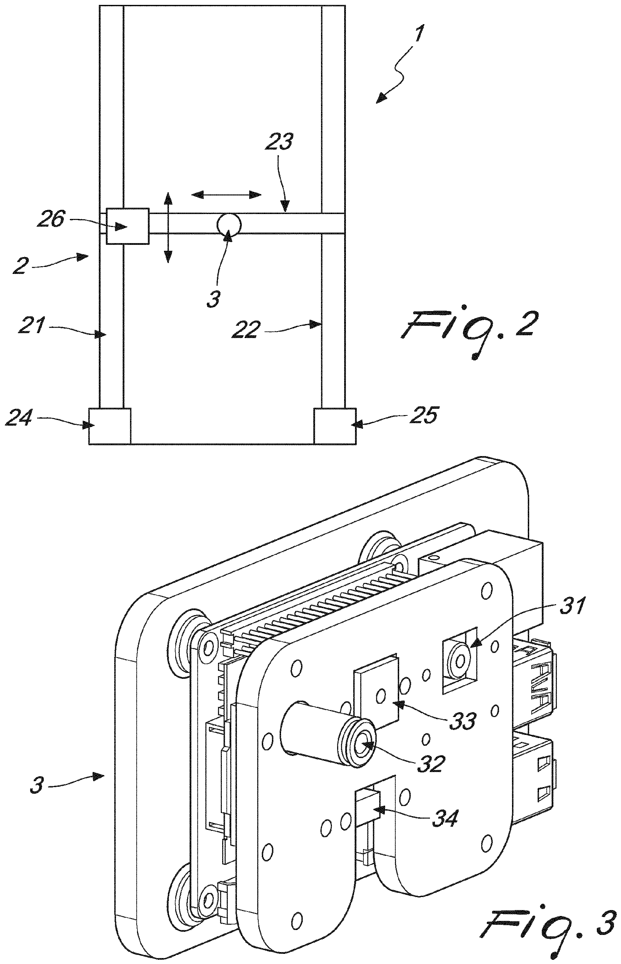

In its general sections and with reference also to Fig. 2, the device 1 comprises a movement system 2 for a detection head 3.

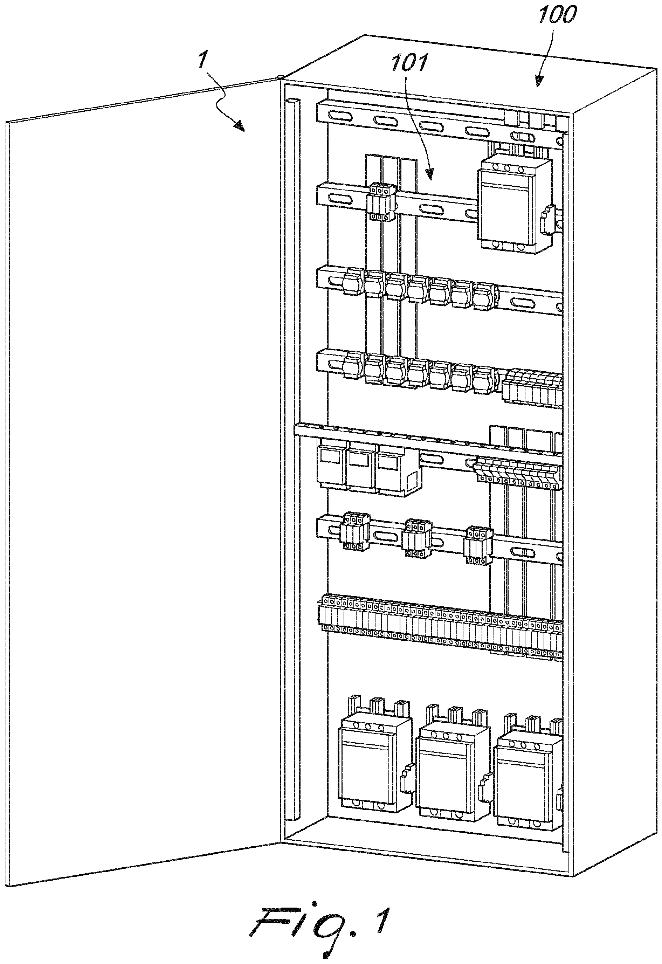

In particular, the movement system 2 is designed to move the detection head 3 at least along a measurement plane and is configured to be coupled to the industrial cabinet 100, as shown in Fig. 1.

In the preferred and illustrated embodiment, the movement system 2 comprises:
- a first post and a second post 21, 22, preferably parallel, which are provided with elements for fixing to the frame structure of the cabinet 100,
- a crossmember 23 which is connected to the posts so that it can move vertically,
- at least one first motor and one second motor 24, 25 with respective transmission assemblies to actuate the vertical movement of the crossmember 23, each motor being coupled to a respective post 21, 22, in order to actuate the vertical movement of the crossmember 23,
- a movement motor and a corresponding assembly 26 for moving the detection head 3 on the crossmember 23, the movement motor 26 being coupled to the crossmember 23.

In this way the detection head 3 can be moved in a substantially vertical plane, parallel to that on which the electrical components housed in the cabinet 100 are present (when viewed frontally).

As an alternative to the two motors 24, 25 described above and for the same purposes, it is possible to provide that the movement system 2 comprises a single motor, for example fixed, to control the vertical movement of the crossmember 23, for example by means of a (single) transmission unit (for example a belt transmission unit).

Moving now to the detection head 3, it comprises, in a basic form, a radiometric video camera 31 and a spot temperature sensor 32.

In a more evolved form shown schematically in Fig. 3, the head 3 further comprises a video camera 33 and a lighting system 34.

As can be noted, both the radiometric video camera 31 and the spot temperature sensor 32 and, if provided, the video camera 33 and the lighting system 34 are mounted on the head 3 so as to be turned towards the same face of the latter, which is the one facing the electrical components of the cabinet 100.

Technical details of the components of the head 3 will be provided below, for now suffice it to note that the device 1 just described is configured to perform the method according to the invention.

Moving now to the method subject-matter of the invention, it is designed for the detection of the temperature of electrical apparatuses in an industrial cabinet.

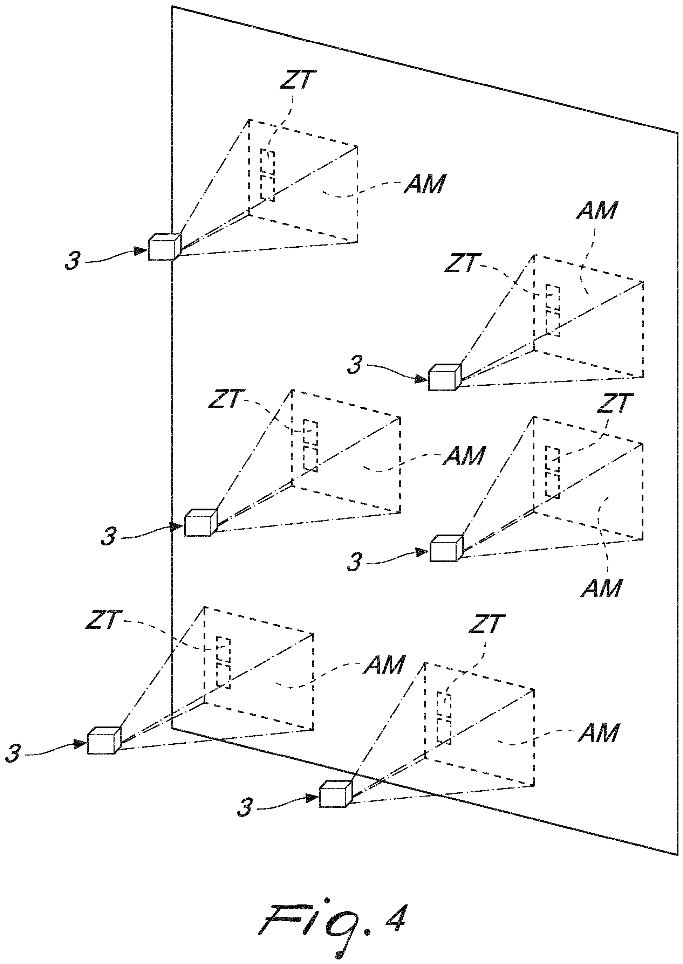

With reference also to Fig. 4 and in its general terms, the method subject-matter of the invention comprises the steps of
a) preparing a map of sensitive points inside the cabinet, said map comprising a list of coordinates of said sensitive points, preferably as pairs of X- and Y-axis coordinates with respect to a predetermined origin point, and, for each sensitive point of said map:
b) moving a radiometric video camera 31 at the sensitive point,
c) performing, by means of said radiometric video camera 31, a preliminary detection of the temperatures in a measurement area AM located around the sensitive point,
d) identifying, within the measurement area AM, a region at maximum temperature ZT with respect to the detected temperatures,
e) measuring the temperature of the region at maximum temperature ZT by means of a spot temperature sensor 32.

By observing Fig. 4, the detection head 3 of the device 1 is shown in different positions, each coinciding with the coordinates of a sensitive point; the head 3 is moved so as to be brought at each sensitive point thanks to the movement system 2 of the device 1 described above.

The coordinates of the sensitive points are preferably representable as an ordered pair of values (corresponding to X- and Y-axis) representing (on a plane having defined origin) the point where the head 3 is moved.

Said coordinates (x,y) of the sensitive points are preset and preferably coincide with the points of the electrical panel housed in the cabinet 100 at which rises in temperature that are risky in terms of danger of fire or malfunction could be more easily caused; by way of example, if transformers (usually subject to heating) are provided on the electrical panel of the cabinet 100, at least one sensitive point will be positioned at the transformer. Therefore, at least ideally, the number and the coordinates of the sensitive points vary from cabinet to cabinet depending on the electrical components it houses.

The head 3 is therefore moved up to the coordinates of a sensitive point and the radiometric video camera 31 frames a certain measurement area AM which is found to extend around the sensitive point.

By its nature the radiometric image allows to determine the variation (with respect to the area) of the temperatures in the area AM, thus allowing to determine which is the region with maximum relative temperature ZT ("relative" in the sense that it is the maximum temperature within the area AM).

To have a precise temperature measurement, at this point it is the spot temperature sensor 32, preferably a thermopile, which makes a measurement of the region only at maximum temperature ZT, precisely determining the temperature value thereof. Depending on the case, for each area AM, it may or not be necessary to move the head 3 so as to allow the spot temperature sensor 32 to measure the maximum temperature of the region ZT; consider in this context that the radiometric video camera 31 has a detection area considerably larger than that of the spot temperature sensor 32.

In this way, advantageously, it is not necessary to move the spot temperature sensor 32 in a plurality of points all around an electrical component potentially subject to heating, but it is sufficient to frame the area AM of the electrical panel in which said component is mounted and determine, within the area, that region ZT that has maximum relative temperature and carry out a spot and precise measurement only of the temperature value of the aforementioned region.

This, of course, allows for considerable time savings in monitoring the temperatures within the cabinet 100.

At the same time, the head 3 comprises a minimum number of sensors (at least the thermal camera 31 and the spot sensor 32) to the advantage of cost and weight; lastly, consider that this last factor allows to reduce the mechanical requirements required of the movement system 2 (e.g. post and crossmember dimensions or power of the motors) to the advantage of reducing costs and overall dimensions.

Finally, in this context, it is also necessary to consider that the time transients between one movement and the other of the head 3 are reduced, which are necessary to allow the latter to stabilize: a lower inertia determined by a lower weight of the components allows in fact to have a reduced stabilization time of the radiometric video camera and/or of the spot temperature sensor.

As just highlighted, therefore the method optionally comprises the step d1) of moving said spot sensor substantially at the maximum temperature region.

With regard to further optional steps of the method, consider that the preliminary temperature detection carried out by the radiometric video camera referred to in step c) above is preferably carried out within the viewing region of the radiometric video camera, in a condition in which the radiometric video camera is stationary and centered on said sensitive point; alternatively the radiometric video camera could in fact be centered at a point close to the desired one, but this could result in not precise measurements.

Regarding any alarms or warnings related to overtemperatures, the method optionally provides for the step f) of generating a warning or alarm signal when a temperature measured by the spot temperature sensor exceeds a preset threshold value.

This step is optional in the sense that different interventions could also be envisaged; for example, on the occasion of a temperature detection that exceeds a preset value, the panel could be automatically put out of order.

As regards this temperature threshold value, consider that in one version of the method this value is common for all the measurements of the spot temperature sensor; for example, it could be defined as a value at which the likelihoods of developing a fire are - absolutely - high.

According to a more evolved variant, this threshold value is defined individually for each measurement of the spot temperature sensor, for example according to the sensitive point being measured: this allows the alarm intervention to be individualized according to the temperatures which, for that particular electrical component present in the area AM, are considered undesirable (and which may differ, for example, between a transformer and a chip).

According to a more evolved variant of the method, there are further provided the steps of
g) lighting the inside of the cabinet and acquiring an image by means of a video camera;
h) displaying on a screen an image of the inside of the industrial cabinet and superimposing on said image imaging data obtained by the radiometric video camera and/or temperature data measured by the spot temperature sensor.

In this way an operator, even remotely, can display an image of the inside of the cabinet and read on it both the detections made by the radiometric video camera 31 and the values measured by the spot temperature sensor 32; the intervention of the operator is thus facilitated, as he can, at a glance, interpret the measurements and understand if there is actually a risk of malfunction/fire.

Returning to the device 1, it should be noted that preferably the two posts 21 and 22 are designed to be mounted in a vertical condition inside the cabinet; preferably fixed to its shoulder walls (also called side walls) and are provided with sliding guides (known per se) in which corresponding running slides of the crossmember 23 (also known per se) move; a person skilled in the art can effortlessly provide other solutions in order to make the crossmember 23 movable with respect to the posts 21,22 (e.g. with bearings or the like) which, however, are completely equivalent for the purposes of the present invention. The first post and second post 21, 22 are provided with elements for fixing (e.g. screws and bolts) to the frame structure of the cabinet, so that once installed they are integral to the latter.

As far as the motors 24, 25 and 26 are concerned, they are preferably electric stepper motors or pneumatic actuators, with oil or the like, to allow a precise positioning of the head 3 at the sensitive points.

Preferably, the arrangement of the posts 21 and 22 and of the crossmember 23 with respect to the cabinet 1 is such that the head 3 in its movement can come to cover the entire area on which the electrical components of the cabinet 100 are positioned. Furthermore, the various components of the device 1 just described are operatively connected to a controller (not shown), such as an electronic control unit, a computer or the like, which actuates them to carry out the various steps of the method of the invention. As far as the radiometric video camera 31 are concerned, it is an instrument that measures the temperature of a surface, interpreting the intensity of an infrared signal that reaches the thermal camera; the radiometric video camera 31 thus allows to obtain images in which it is possible to accurately measure the temperatures of the objects represented with the pixels of the image.

For example, in a non-limiting manner, a radiometric video camera 31 usable in the context of the invention has the following characteristics:
- Radiometric accuracy:
- High gain: Greater than +/-5°C or 5% (typical)
- Low Gain: Greater than +/-10°C or 10% (typical)
- Input clock: Nominal 25 MHz, voltage levels IO CMOS
- Temperature compensation:
   Automatic. Temperature-independent image of the thermal camera.
- Pixel dimensions: 17 µm
- Output format: user-selectable 14-bit, 8-bit (AGC applied), or 24-bit RGB (AGC and colourization applied)
- Actual frame rate: 8.6 Hz (exportable commercial application)
- Dynamic framing range: -10-140 °C (high gain); up to 450 °C (low gain) typical
- Power dissipation: 150 mW (in operation), 650 mW (during shutter event), 4 mW (standby)
- Input voltage: 2.8V, 1.2V, from 2.5V to 3.1V IO.

As mentioned, the spot temperature sensor 32 detects a temperature spot data (value). In a non-limiting manner, a spot temperature sensor 32 usable in the context of the invention has the following characteristics:
- temperature range: from -40 to 125°C for the temperature of the sensor and from -70 to 380°C for the temperature of the object,
- precision: 0.5°C over a wide range of temperatures (0...+50 C for Ta and To) and 1° precision for temperatures up to 100°,
- measurement resolution of 0.02°C.

As far as the video camera 33 and the lighting system 34 are concerned, if provided, their function in the context of the invention becomes even clearer by observing that the radiometric image generated by the radiometric video camera 31 is in fact a thermal image that does not allow an operator the "visually" clear interpretation of what he is observing on a screen: the individual coloured pixels are in fact difficult to interpret. The video camera 33 generates an image, in the visible, of what is simultaneously detected by the radiometric video camera 31; the lighting system 34, preferably comprising an LED light, illuminates the detection field of the video camera 33: according to the invention the image of the video camera 33 is superimposed on the image of the radiometric video camera 31 and/or the measurements of the spot sensor 32 to thus generate an image containing the data of all the detection devices (radiometric video camera 31 and/or spot temperature sensor 32 and video camera 33): it is thus easy for an operator to understand the situation inside the cabinet 100.

Preferably, in the measurement area of the head 3 both video cameras 31 and 33 are thus active, each of which produces its own image (radiometric or visible)
of the measurement area; the two images are then superimposed to form a single image that is made visible to an operator, who, by observing it, obtains not only information about the temperature but also about the nature of the object framed in the measurement area.

In a non-limiting manner, a video camera 33 usable in the context of the invention has the following characteristics:
- Video sensor: colour, 8Mp CMOS
- Raspberry compatibility: Pi 2 and Pi 3
- Bus Interface: CSI-2
- Operating temperature: -30 C° ÷ +70 C°
- Channels: 1
- Supported video ports: DVI
- Resolution: 8Mp (3280 x 2464)
- Supported transmission standards:
   1080p30, 720p60, VGA90
- Pixel number: 3296 x 2512 (of which 3280 x
   2464 pixels active)
- Viewing angle: customizable by the user
- Flat cable length: 15cm
- Dimensions of the video module: 25x23x9 mm
- Weight: 3.4 g

The device of the invention then preferably comprises a display unit by means of which an operator is able to see the image made by superimposing the data as just described. The device 1 further comprises for this purpose at least one electronic unit for video processing, to which the image data arrive and which is responsible for superimposing the two images so as to represent them on the display unit for the operator.

To the device 1 can also be connected an ambient temperature sensor, configured to detect ambient temperature values of the environment outside (and surrounding) the cabinet 100.

For example, the ambient temperature sensor is located near or at the controller and is operatively connected thereto, so as to make available an (instantaneous) value of the ambient temperature outside the cabinet 100.

The (instantaneous) value of the ambient temperature is used by the controller as a comparison index.

The use of the method and of the device according to the invention are evident from what has been described above.

In practice, it has been observed how the invention achieves the task and the designed purposes.

The invention thus conceived is susceptible to numerous modifications and variants, all falling within the scope of the inventive concept; moreover, all the details may be replaced by other technically equivalent elements.

In practice, the materials used could be of any type (so long as they are compatible with the specific use), as well as the contingent shapes and dimensions, according to requirements and the state of the art.

Where the features and techniques mentioned in any claim are followed by reference marks, such reference marks are intended to be affixed solely for the purpose of increasing the intelligibility of the claims and, consequently, such reference marks have no limiting effect on the interpretation of each element identified by way of example by such reference marks.

## Claims

1. A method for detecting the temperature of electrical apparatuses in an industrial cabinet (100), comprising the steps of
a) preparing a map of sensitive points inside the cabinet (100), said map comprising a list of coordinates of said sensitive points, preferably as pairs of X- and Y-axis coordinates with respect to a predetermined origin point, and, for each sensitive point of said map:
b) moving a radiometric video camera (31) at the sensitive point,
c) performing, by means of said radiometric video camera (31), a preliminary detection of the temperatures in a measurement area located around the sensitive point,
d) identifying, within the measurement area, a region at maximum temperature with respect to the detected temperatures,
e) measuring the temperature of the region at maximum temperature by means of a spot temperature sensor.

2. The method according to claim 1, comprising, prior to step e), the step d1) moving said spot sensor substantially at the maximum temperature region.

3. The method according to claim 1 or 2, wherein said preliminary detection of step c) is performed within the viewing region of the radiometric video camera (31), in a condition in which the radiometric video camera (31) is stationary and centered on said sensitive point.

4. The method according to one or more of the preceding claims, wherein the following step is further provided:
f) generating a warning or alarm signal when a temperature measured by the spot temperature sensor exceeds a preset threshold value.

5. The method according to the preceding claim, wherein said threshold value is common for all the measurements of the spot temperature sensor.

6. The method according to claim 4, wherein said threshold value is defined individually for each measurement of the spot temperature sensor.

7. The method according to one or more of the preceding claims, wherein the following steps are provided:
g) lighting the inside of the cabinet and acquiring an image by means of a video camera;
h) displaying on a screen an image of the inside of the industrial cabinet and superimposing on said image imaging data obtained by the radiometric video camera and/or temperature data measured by the spot temperature sensor.

8. A device (1) for detecting the temperature of electrical apparatuses in an industrial cabinet (100), comprising:
- a movement system (2) for a detection head (3), said movement system (2) being designed to move said detection head (3) at least along a measurement plane, said movement system (2) being configured to be coupled to said industrial cabinet (100),
- said detection head (3), which in turn comprises: a radiometric video camera (31) and a spot temperature sensor (32),
- a controller configured to perform the method of claim 1.

9. The device (1) according to the preceding claim, wherein the movement system (2) comprises:
- a first post and a second post (21,22) which are provided with elements for fixing to the frame structure of the cabinet (100),
- a crossmember (23) which is connected to the posts (21,22) so that it can move vertically,
- at least one first motor and one second motor (24,25) with respective transmission assemblies to actuate the vertical movement of the crossmember (23), which is associated with the second post, each motor (24,25) being coupled to a respective post (21,22), in order to actuate the vertical movement of the crossmember (23),
- a movement motor and a corresponding assembly (26) for moving the detection head (3) on the crossmember (23), the movement motor being coupled to the crossmember (23).

10. The device (1) according to claim 8 or 9, wherein said detection head (3) further comprises a video camera (33) and a lighting system (34).

## Patentansprüche

1. Verfahren zum Erfassen der Temperatur von elektrischen Geräten in einem industriellen Schrank (100), umfassend die folgenden Schritte
a) Erstellen einer Karte empfindlicher Punkte innerhalb des Schranks (100), die Karte umfassend eine Liste von Koordinaten der empfindlichen Punkte, vorzugsweise als Paare von X- und Y-Achsenkoordinaten in Bezug auf einen vorbestimmten Ausgangspunkt, und für jeden empfindlichen Punkt der Karte:
b) Bewegen einer radiometrischen Videokamera (31) auf den empfindlichen Punkt,
c) Durchführen, mittels der radiometrischen Videokamera (31), einer vorläufigen Erfassung der Temperaturen in einem Messbereich, der sich um den empfindlichen Punkt befindet,
d) Identifizieren, innerhalb des Messbereichs, einer Region mit maximaler Temperatur in Bezug auf die erfassten Temperaturen,
e) Messen der Temperatur der Region mit der höchsten Temperatur mittels eines Punkttemperatursensors.

2. Verfahren nach Anspruch 1, umfassend vor Schritt e) den Schritt d1) eines Bewegens des Punktsensors im Wesentlichen in die Region mit maximaler Temperatur.

3. Verfahren nach Anspruch 1 oder 2, wobei die vorläufige Erfassung von Schritt c) innerhalb der Sichtregion der radiometrischen Videokamera (31) in einem Zustand durchgeführt wird, in dem die radiometrische Videokamera (31) stationär und auf den empfindlichen Punkt zentriert ist.

4. Verfahren nach einem oder mehreren der vorherigen Ansprüche, wobei ferner der folgende Schritt bereitgestellt ist:
f) Erzeugen eines Warn- oder Alarmsignals, wenn eine von dem Punkttemperatursensor gemessene Temperatur einen voreingestellten Schwellenwert überschreitet.

5. Verfahren nach dem vorherigen Anspruch, wobei der Schwellenwert für alle Messungen des Punkttemperatursensors gleich ist.

6. Verfahren nach Anspruch 4, wobei der Schwellenwert für jede Messung des Punkttemperatursensors individuell definiert ist.

7. Verfahren nach einem oder mehreren der vorherigen Ansprüche, wobei die folgenden Schritte bereitgestellt sind:
g) Beleuchten der Innenseite des Schranks und Aufnehmen eines Bilds mittels einer Videokamera;
h) Anzeigen, auf einem Bildschirm, eines Bilds der Innenseite des industriellen Schranks und Überlagerung dieses Bilds mit Bilddaten, die von der radiometrischen Videokamera erlangt werden, und/oder mit Temperaturdaten, die von dem Punkttemperatursensor gemessen werden.

8. Vorrichtung (1) zum Erfassen der Temperatur von elektrischen Geräten in einem industriellen Schrank (100), umfassend:
- ein Bewegungssystem (2) für einen Erfassungskopf (3), wobei das Bewegungssystem (2) konstruiert ist, um den Erfassungskopf (3) zumindest entlang einer Messebene zu bewegen, wobei das Bewegungssystem (2) konfiguriert ist, um mit dem industriellen Schrank (100) gekoppelt zu werden,
- den Erfassungskopf (3), der seinerseits Folgendes umfasst: eine radiometrische Videokamera (31) und einen Punkttemperatursensor (32),
- eine Steuerung, die konfiguriert ist, um das Verfahrens nach Anspruch 1 durchzuführen.

9. Vorrichtung (1) nach dem vorherigen Anspruch, wobei das Bewegungssystem (2) Folgendes umfasst:
- einen ersten Pfosten und einen zweiten Pfosten (21, 22), die mit Elementen zum Befestigen an der Rahmenstruktur des Schranks (100) versehen sind,
- einen Querträger (23), der mit den Pfosten (21, 22) verbunden ist, sodass er sich vertikal bewegen kann,
- mindestens einen ersten Motor und einen zweiten Motor (24, 25) mit jeweiligen Antriebsanordnungen zum Betätigen der vertikalen Bewegung des Querträgers (23), der mit dem zweiten Pfosten assoziiert ist, wobei jeder Motor (24, 25) mit einem jeweiligen Pfosten (21, 22) gekoppelt ist, um die vertikale Bewegung des Querträgers (23) zu betätigen,
- einen Bewegungsmotor und eine entsprechende Anordnung (26) zum Bewegen des Erfassungskopfs (3) auf dem Querträger (23), wobei der Bewegungsmotor mit dem Querträger (23) gekoppelt ist.

10. Vorrichtung (1) nach Anspruch 8 oder 9, wobei der Erfassungskopf (3) ferner eine Videokamera (33) und ein Beleuchtungssystem (34) umfasst.

## Revendications

1. Procédé de détection de la température d'appareils électriques dans une armoire industrielle (100), comprenant les étapes suivantes :
a) la préparation d'une carte des points sensibles à l'intérieur de l'armoire (100), ladite carte comprenant une liste de coordonnées desdits points sensibles, de préférence sous forme de paires de coordonnées des axes X et Y par rapport à un point d'origine prédéterminé, et, pour chaque point sensible de ladite carte :
b) le déplacement d'une caméra vidéo radiométrique (31) au niveau du point sensible,
c) la réalisation, au moyen de ladite caméra vidéo radiométrique (31), d'une détection préliminaire des températures dans une zone de mesure située autour du point sensible,
d) l'identification, dans la zone de mesure, d'une région à température maximale par rapport aux températures détectées,
e) la mesure de la température de la région à température maximale à l'aide d'un capteur de température ponctuel.

2. Procédé selon la revendication 1, comprenant, avant l'étape e), l'étape d1) consistant à déplacer ledit capteur ponctuel sensiblement dans la région de température maximale.

3. Procédé selon la revendication 1 ou 2, dans lequel la détection préliminaire de l'étape c) est effectuée dans la zone de visualisation de la caméra vidéo radiométrique (31), lorsque la caméra vidéo radiométrique (31) est stationnaire et centrée sur le point sensible.

4. Procédé selon l'une ou plusieurs des revendications précédentes, dans lequel l'étape suivante est en outre destinée à :
f) générer un signal d'avertissement ou d'alarme lorsque la température mesurée par le capteur de température ponctuel dépasse une valeur seuil prédéfinie.

5. Procédé selon la revendication précédente, dans lequel ladite valeur seuil est commune à toutes les mesures du capteur de température ponctuel.

6. Procédé selon la revendication 4, dans lequel ladite valeur seuil est définie individuellement pour chaque mesure du capteur de température ponctuel.

7. Procédé selon l'une ou plusieurs des revendications précédentes, dans lequel les étapes suivantes sont en outre destinées à :
g) l'éclairage de l'intérieur de l'armoire et l'acquisition d'une image au moyen d'une caméra vidéo ;
h) l'affichage sur un écran d'une image de l'intérieur de l'armoire industrielle et la superposition sur cette image des données d'imagerie obtenues par la caméra vidéo radiométrique et/ou des données de température mesurées par le capteur de température ponctuel.

8. Dispositif (1) de détection de la température d'appareils électriques dans une armoire industrielle (100), comprenant :
- un système de déplacement (2) d'une tête de détection (3), ledit système de déplacement (2) étant conçu pour déplacer ladite tête de détection (3) au moins le long d'un plan de mesure, ledit système de déplacement (2) étant configuré pour être couplé à ladite armoire industrielle (100),
- ladite tête de détection (3), qui comprend à son tour : une caméra vidéo radiométrique (31) et un capteur de température ponctuel (32),
- un contrôleur configuré pour exécuter le procédé selon la revendication 1.

9. Dispositif (1) selon la revendication précédente, dans lequel le système d déplacement (2) comprend :
- un premier montant et un deuxième montant (21,22) pourvus d'éléments de fixation à la structure du cadre de l'armoire (100),
- une traverse (23) reliée aux montants (21,22) de manière à pouvoir se déplacer verticalement,
- au moins un premier moteur et un deuxième moteur (24,25) équipés des ensembles de transmission respectifs permettant d'actionner le mouvement vertical de la traverse (23), qui est associée au deuxième poteau, chaque moteur (24,25) étant couplé à un poteau respectif (21,22), afin d'actionner le mouvement vertical de la traverse (23),
- un moteur de déplacement et un ensemble correspondant (26) pour déplacer la tête de détection (3) sur la traverse (23), le moteur de déplacement étant couplé à la traverse (23).

10. Dispositif (1) selon la revendication 8 ou 9, dans lequel ladite tête de détection (3) comprend en outre une caméra vidéo (33) et un système d'éclairage (34).
